# EUROPEAN PATENT SPECIFICATION

(11) **EP 1 579 791 B1**
(45) Date of publication and mention of the grant of the patent: **01.08.2007**
(21) Application number: 04007294.4
(22) Date of filing: 26.03.2004
(51) Int. Cl.: A47J 31/06, A47J 31/40, B65D 81/00

(54) **Integrated cartridge for extracting a beverage from a particulate substance**
Integrierte Kapsel zur Zubereitung eines Getränkes aus einer Pulversubstanz
Cartouche integrée pour l'extraction d'une boisson à partir d'une substance particulaire

(43) Date of publication of application: 28.09.2005
(73) Proprietor: ILLYCAFFE' S.p.A., I-34147 Trieste (IT)
(72) Inventor: Suggi Liverani, Furio, 34123 Trieste (IT); Mastropasqua, Luca, 34123 Trieste (IT); Van Eeden, Frans, 20136 Milano (IT); Dellapietra, Bruno, 34013 Duino Aurisina (Prov. of Trieste) (IT)
(74) Representative: Modiano, Micaela Nadia

(56) References cited:
- WO-A-93/17932
- US-A- 4 389 925
- US-A- 4 921 712
- US-A- 5 243 164
- US-A1- 2003 096 038
- US-A1- 2003 172 813

## Description

The present invention relates to an integrated cartridge for extracting a beverage from a particulate substance, such as ground coffee, instant coffee, tea, powdered chocolate or milk, and the like.

It is known that machines for extracting a beverage from a particulate substance usually require that the particulate substance is placed into a filtering receptacle installed in the machine. In particular, automatic/semiautomatic espresso coffee machines comprise a filtering receptacle, also called filter holder, in which a dose of ground coffee is placed before the extraction of coffee beverage takes place.

The general steps for extracting a coffee beverage in an espresso coffee machine, which are substantially equivalent to those of other automatic machines for preparing a beverage starting from a powdered substance, comprise a phase of delivering hot water under suitable pressure into an extraction chamber which includes the filtering receptacle, a brewing phase and a phase of conveying the brewed beverage into an external cup or glass, ready to drink.

Ground coffee, as well as other particulate substances for preparing brewed beverages, is usually a single use substance, in that the organoleptic qualities such as taste, aroma and body of the brewed beverage are irremediably lost once ground coffee has been soaked. Accordingly, in espresso coffee machines and in other brewing machines the particulate substance has to be removed after one single brewing. This is the reason why the filtering receptacle housing a dose of ground coffee is usually manually removable from the espresso coffee machine, in order to allow emptying of the receptacle from the used ground coffee and filling it with a new dose of ground coffee.

In order to facilitate the operations of filling and emptying the filtering receptacle, single serving pre-packaged tablets of ground coffee (identified with the standard name "E.S.E.") have been provided, consisting of a dose of ground coffee contained in a filtering paper bag or sachet, to be placed directly in a filter holder of the espresso coffee machine. While this arrangement has resulted handy, it is affected by some drawbacks. In particular, the tablet is not air-tight and accordingly a second air-tight packaging must be provided for enclosing each dose, in order to keep the tablet uncontaminated from the external environment during storage (see, for instance, CH-A-495138).

Moreover, the user's hands come into contact with the tablet when the tablet is placed on the filter holder so that hygiene requirements are not fully assured.

In the past years, disposable capsules containing ground coffee have been also provided. Such capsules, generally having a frustum shape, are made of plastics or aluminum and provide a better air-tight barrier to the external environment than the filtering paper used in tablets.

CH605293 discloses a capsule having a top surface that is pierceable by an injection needle/nozzle of the espresso coffee machine, in order to inject water under pressure inside the capsule, and a bottom surface comprising weakened zones which tear under pressure of percolation fluids. An internal filter is also provided inside the capsule for preventing solid substances from being ejected from the capsule together with the coffee beverage.

Another known capsule comprises a cylindrical body made of polypropylene, with a top and a bottom surface having a plurality of openings for distributing hot water throughout the dose of ground coffee, and comprising a sheet of paper filter for blocking passage of ground coffee outside the openings of the bottom surface during the extraction phase. These capsules have usually to be placed into a further packaging, such as a multilayered plastic sachet.

In order to prepare a coffee beverage, the known capsules and cartridges are placed into the filter holder, that constitutes an extraction chamber for coffee when it is installed on the coffee machine. During the extraction phase, the percolation fluids may come into contact with internal surfaces of the extraction chamber before definitively flowing out into the external coffee cup. Such contact contaminates the extraction chamber as well as the filter holder and after a number of coffee extraction operations the quality of the beverage is greatly reduced, suffering from residuals and contaminants in the extraction chamber.

Accordingly, the extraction assembly, comprising the extraction chamber and the filter holder, has to be accurately cleaned after a certain number of coffee extraction operations; in addition, decalcification must be performed on a regular basis.

Even when such cleaning operations are regularly carried out, the fluid turbulence inside the extraction chamber of the machine or the insufficient fluid-tight seal at the opened top surface of the capsule during water injection causes either the extracted beverage or the injected water to lap portions of the external surface of the capsule itself, thus jeopardizing the extraction hygiene requirements.

Another drawback of known capsules is that they do not retain percolation fluid residuals inside the capsule, in that perforations or openings on the top surface and/or on the bottom surface of the capsules provide for an escape for fluid residuals when the extraction is terminated and/or when the capsule is removed from the machine, causing the capsule to drip and dirt the surroundings of the coffee machine.

In addition, the known capsules and espresso coffee machines do not suffer from a limited hygienic character only, but they are often affected by a not so efficient distribution of hot water into the ground coffee and/or delivery of the coffee beverage.

In fact, in known capsules having a frustum shape, the hot water is injected into the internal volume by means of a nozzle that pierces the top surface, which has a smaller diameter than the bottom surface, so that hot water is sprayed from a single point rather than being evenly showered onto the whole dose of coffee. Accordingly, the hot water washes the coffee particles in an inhomogeneous way.

This drawback has been partially solved by the cartridge disclosed in EP-A-1344722, wherein two discs are provided inside the cartridge having a plurality of openings and a plurality of embossings, in order to create a plurality of fluid channels. Unfortunately, such known cartridge has to be pierced on both the upper and the lower surface in order to extract the beverage, and the internal volume of the cartridge has to be burdened with additional elements such as distribution discs.

Yet another drawback of prior art cartridges is that they are not very handy, in that a user must control the insertion direction when he installs the cartridge into an extraction machine. This control may be facilitated by means of a particular shape of the cartridge's receptacle in the machine, but when the user is particularly hurried (for instance, when the user is a barman assigned to continuously and quickly prepare coffee beverages for many customers) even a control of a minor nature is unacceptable.

Aim of the present invention is to overcome the drawbacks of prior art cartridges and capsules by providing a cartridge and an extraction assembly which speed up the beverage preparation operations.

Within the scope of this aim, an object of the invention is to greatly reduce or eliminate contamination of any component of machines for producing a beverage from a particulate substance.

A second particular object of the present invention is to provide a universal beverage extraction system, which takes advantage of its contamination-free structure for allowing consecutive extractions of beverages from different kinds of particulate substances.

Another particular object of the present invention is to transfer most of the tasks that are conventionally performed by beverage extraction machines to the cartridges to be used in such extraction machines.

A further particular object of the present invention is to guarantee a high level of preservation of the particulate substance inside the cartridge until the cartridge is installed into the beverage extraction machine, reducing contamination of the particulate deriving from the external environment.

Another object is to simplify use of the cartridge, reducing the number of operations to be carried out for preparing the cartridge to installation into a beverage extraction machine.

Yet another object is to provide an improved even distribution of the injection fluid throughout the entire dose of particulate substance of the cartridge.

Not least object is to simplify and reduce the internal load of the cartridge and the beverage extraction machine without affecting the quality of the final beverage.

This aim, these objects and other which will become apparent hereinafter are achieved by a cartridge for extracting a beverage from a particulate substance contained therein by means of water under pressure, the cartridge comprising: a main body comprising a cup portion and a lid portion, the cup portion comprising a base, a sidewall and a rim opposed to the base, the lid portion being fixedly attached to the rim of the cup portion so as to define an internal volume of the cartridge, the internal volume of the cartridge housing the particulate substance comprised within filtering means for retaining the particulate substance and for percolating fluid substances therethrough, the lid portion comprising a lid port defining a first passage for percolation fluid substances, the base of the cup portion comprising a cup port defining a second passage for percolation fluid substances, the lid port and the cup port being substantially aligned on a water injection axis, characterized in that the main body is shaped so as to be substantially symmetrical with respect to a plane perpendicular to the water injection axis, so that the cartridge is usable regardless of which port will operate as an inlet port for receiving water and regardless of which port will operate as an outlet port for ejecting the extracted beverage.

Further characteristics and advantages of the invention will become better apparent from the following description of preferred but not exclusive embodiments, illustrated by way of non-limitative embodiments in the accompanying drawings, wherein:
Figure 1 is a perspective view of a cartridge according to a first embodiment of the invention;
Figure 2 is a perspective, cross-sectional, exploded view of the cartridge of Figure 1, taken along plane A-A of Figure 1;
Figure 3 is a top view of the cup portion of the cartridge of Figure 1;
Figure 4 is a cross-sectional view of the cup portion of Figure 3, taken along plane B-B;
Figure 5 is a perspective cross-sectional view of a cartridge which does not form part of the invention;
Figure 6 is a perspective cross-sectional view of a cartridge which does not form part of the invention;
Figure 7 is a perspective broken away view of the shim of Figure 5;
Figure 8 is a perspective view of a cartridge according to another embodiment of the invention;
Figure 9 is a perspective view of an extraction assembly according to a second aspect of the invention;
Figure 10 is an exploded view of the extraction assembly of Figure 9;
Figure 11 is a perspective broken away view of the extraction assembly of Figure 9 arranged in the beverage extraction position, having a cartridge installed therein;
Figure 12 is a perspective broken away view of an extraction assembly arranged in the beverage extraction position, having a discoidal cartridge installed therein;
Figure 13 is a perspective broken away view of the extraction assembly of Figure 9 arranged in the cartridge expulsion position;
Figure 14 is a bottom view of the nozzle used in the extraction assembly of Figure 9;
Figure 15 is a partial cross-sectional lateral view of the nozzle used in the extraction assembly of Figure 9;
Figure 16 is a cross-sectional lateral view of the nozzle used in the extraction assembly of Figure 12;
Figure 17 is a perspective cross-sectional view, taken along a radial plane, of a cartridge which does not form part of the invention;
Figure 18 is a broken away view of an extraction assembly according to a further embodiment of the invention, in which the cartridge of Figure 17 is installed.

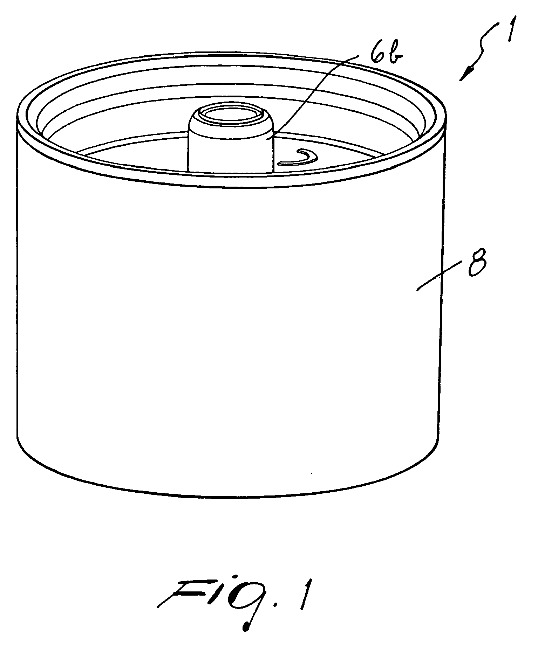

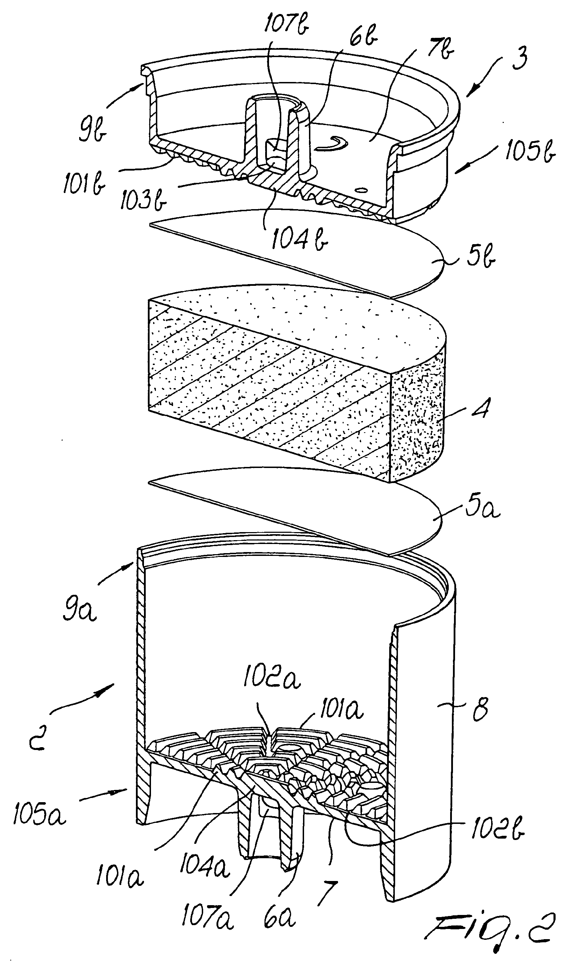

With reference to Figures 1 and 2, a cartridge **1** is shown according to a first preferred embodiment of the present invention. The cartridge has a generally cylindrical shape and comprises a cup portion **2** and a lid portion **3** fixed thereon.

In particular, the cup portion **2** comprises a substantially circular base **7,** a cylindrical sidewall **8** extending from base **7** and a rim **9a,** which is disposed substantially opposite to the base **7** and defines an open end of the cup portion **2.**

An internal volume is defined by the cup base **7,** the sidewall **8** and the lid portion **3,** when the lid portion is fixed on the cup portion. A dose of ground coffee **4** is housed in such internal volume and it is sandwiched between filtering means, preferably consisting of a first paper filter **5b** and a second paper filter **5a.** In an alternative embodiment, a tablet of a known kind can be provided, as it will be described hereafter.

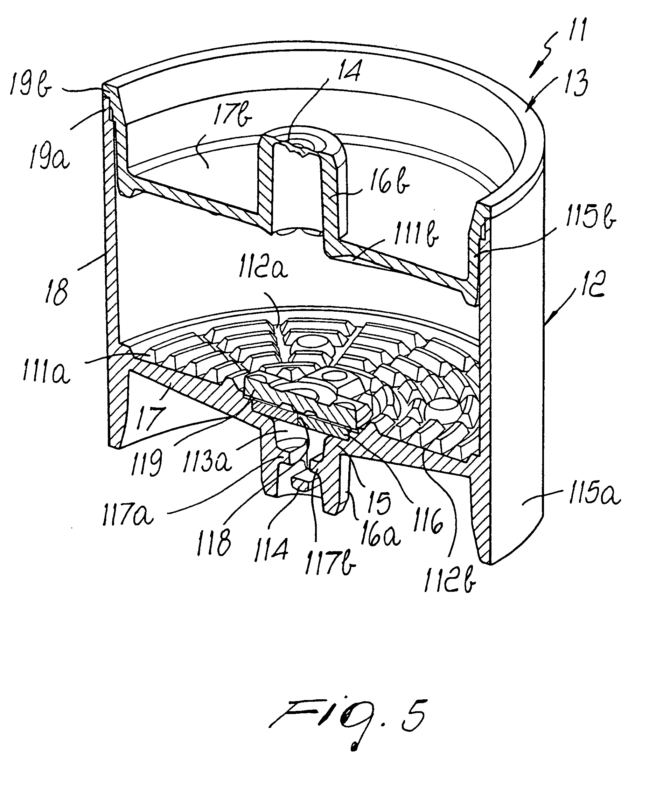

The cup portion **2** comprises a cup port **6a,** which is preferably located in a central region of the cup base **7** and protrudes outwardly with respect to the internal volume of the cartridge, forming a spout. As shown in Figure 2, the cup port **6a** has a substantially cylindrical shape and provides for open access to the internal volume of the cartridge, thus allowing passage of fluids to or from the internal volume of the cartridge. To this aim, the opening **103a** is provided on the cup base **7** in correspondence of the cup port **6a,** as it is shown in Figure 4.

The cup base **7** optionally comprises a flange **105a,** aligned with sidewall **8** and protruding outwardly with respect to the internal volume of the cartridge. Such flange is preferably provided in order to end up with a protruding shape facilitating and promoting handling and automated production processes. Furthermore the capsule can be placed in a horizontal position on a table surface without tilting or rolling, it can be packaged and stacked more easily and it can also be "strip" packaged, i.e. fixed and sealed between two strips of polylaminate films..

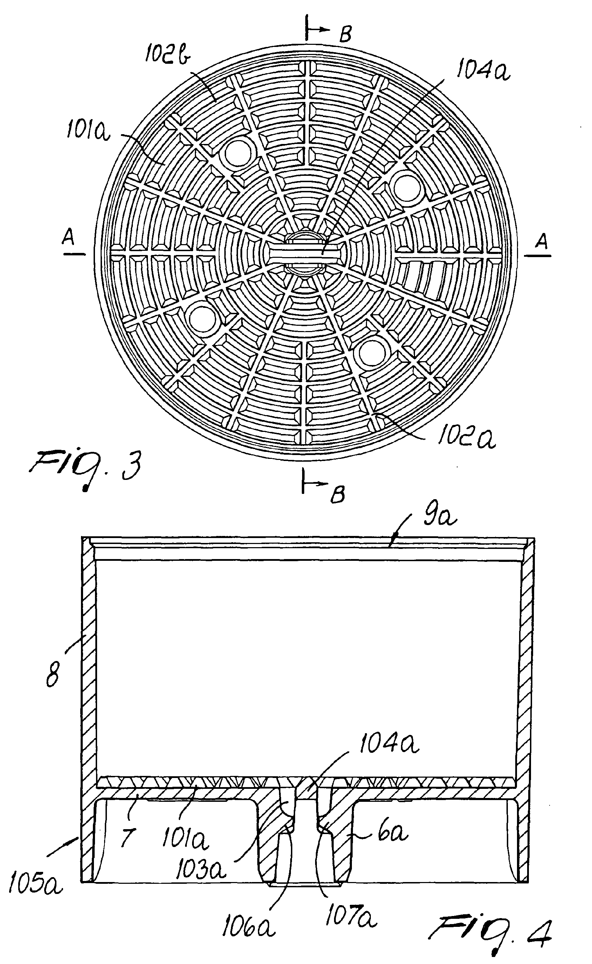

The lid portion **3** is shaped so as to fit with the open end of the cup portion **2** and comprises a lid base **7b,** from which a substantially cylindrical sidewall **105b** extends upwardly and slightly outwardly and which is substantially perpendicular to the lid base **7b.** The sidewall **105b** ends with an annular edge **9b** that is located substantially opposite to the lid base **7b** and that protrudes outwardly from the sidewall **105b,** in order to fit with and lean on the rim **9a** of the cup portion **2.** Preferably, the annular edge **9b** has a substantially stepped cross section, so as to engage with a complementary support located at the rim **9a** of the cup portion **2,** as depicted in Figure 3. Other cross-sectional shapes of the annular edge **9b** and of the rim **9a** can be alternatively provided, as long as these shapes allow to fix the lid portion on the cup portion.

In preferred embodiments, the lid portion and the cup portion are welded to each other using an ultrasonic shear-welding technique. Alternatively, other known welding techniques can be used, for instance common ultrasonic welding, hot welding, bonding and so on. The cartridge according to the invention may also be manufactured as a single moulded piece.

The protruding sidewall **105b** is preferably provided in order to facilitating and promoting handling and automated production processes, as well as to dissociate the shear welding region away from the coffee tablet, thus minimizing interferences of migrating coffee particles with the plastic weld, which might compromise its tight sealing characteristics.

In the preferred embodiment depicted in Figures 1 and 2, the lid portion **3** comprises a lid port **6b** in a central region of its base **7b,** having a generally cylindrical shape and protruding from base **7b** outwardly with respect to the internal volume of the cartridge. The lid port **6b** provides for open access to the internal volume of the cartridge, thus allowing passage of fluids to or from the internal volume. To this aim, the opening **103b** is provided on the lid base **7b** in correspondence of the lid port **6b,** as shown in Figure 2.

In alternative embodiments, described hereafter, the lid port does not protrude from the lid base **7b** or is normally closed, being pierceable by an injection needle or nozzle during the extraction phase. Alternative embodiments of a similar kind will be presented hereafter.

In the cartridges according to the invention, either the lid port **6b** or the cup port **6a** may comprise hurdles for deviating a fluid flow. In particular, referring back to the embodiment of Figures 2-4, a first barrier **104a** is provided on the internal side of the cup base **7** so that it radially crosses the central opening **103a** from which the spout **6a** protrudes, and second barriers **106a, 107a** are provided on the internal surface of the cup port **6a** at a distance from the first barrier and from the opening **103a.**

Preferably, second barriers **106a** and **107a** face each other and protrude from the internal surface of the cup port **6a** so as to define a sort of zigzag path for the fluid passing through the cup port **6a,** thus breaking any direct fluid flow to or from the internal volume of the cartridge and avoiding exceedingly accelerated fluid flow, which may cause jet-spray effects such as spattering.

The first barrier **104a** is particularly useful for either deviating the fluid flow or providing a support against filter paper deformation that may result from the hydraulic extraction fluid pressure. Accordingly, obstruction of the openings **103a** and possible breaking of the filter paper are prevented.

Additionally or alternatively, corresponding fluid flow barriers **104b** and **107b** are also provided at lid port **6b,** as seen in Figure 2. In particular, the barrier **104b** spans the lid opening **103b,** while the barrier **107b** protrudes from the internal surface of the lid port **6b,** facing an identical barrier in order to define a fluid flow pathway substantially analogous to that formed inside the cup port **6a.**

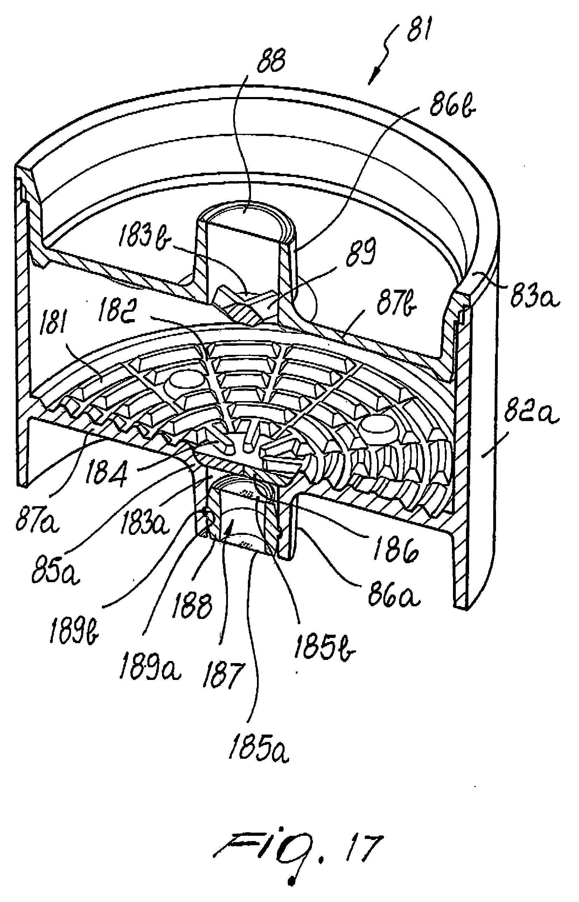

Notwithstanding preferred embodiments of the cartridge according to the invention comprise fluid flow hurdles as depicted in Figures 2-4, the skilled in the art easily appreciates that alternative arrangements or shapes of fluid flow hurdles can be used for the same purpose. For instance, a cross-shaped fluid flow barrier may be provided, so as to support the paper filter and break direct fluid flow into four separate flows. Alternatively, radial projections formed around the lid or the cup opening and radially protruding towards the center of such opening may be provided, as it will be described hereinafter with reference to Figure 17.

Fluid flow hurdles may not be directly formed on the internal surface of the cartridge, but they may be a separate means which can be inserted and fixedly attached to an inlet or an outlet port of the cartridge. For instance, a small plastic tube with both open ends closed by a fluid permeable filter material (for instance, films of thermoplastic sieve material or open mazed tissue or paper). An example of a separate fluid flow hurdle will be described hereinafter with reference to Figure 17.

Moreover, the fluid flow hurdles may be provided at both the lid and cup ports, according to fluid flow requirements.

The cup portion **6a** further comprises a plurality of ridges **101a** directly formed on the base **7** and protruding towards the internal volume of the cartridge, in particular towards the external surface of the paper filter **5a.** The ridges **101a** directly contact paper filter 5a so as to form a plurality of small channels **102a, 102b,** which put in a fluid communication the whole bottom surface of the filter-coffee assembly **4, 5a** with the cup port **6a.** Such channels, preferably, have an average width/height of about 1mm.

Similarly, ridges **101b** are provided on the lid portion **3** which protrude towards the internal volume of the cartridge, in particular towards the upper surface of the paper filter **5b**. A plurality of small channels is accordingly provided between the filter **5b** and the lid base **7b,** connecting the lid port **6b** to the whole top surface of the filter-coffee assembly **4, 5b.**

In alternative embodiments, small fluid channels may be provided on cup portion only, or on lid portion only, or they may not be provided at all. In such cases, a reduced number of ridges is preferably formed on either the cup base or the lid base, and they protrude towards the internal volume of the cartridge in order to form an air space between the cup/lid base and the filtering means. An exemplary arrangement of such kind will be explained hereafter with reference to Figure 11.

Alternatively, in order to provide a fine canalization on at least a portion of the internal surface of the cartridge facing one of the top surface or the bottom surface of the dose comprising the ground coffee and the filtering means, a disc of porous material may be arranged between such dose and cup port or the lid port. Preferably, such disc extends throughout the top or the bottom surface of the dose.

Even though not explicitly shown in Figures 1-4, the lid port and/or the cup port are preferably plugged by a film, for instance made of multilayered plastics, which can be manually removed or can be pierced or torn by the machine during the extraction phase.

Alternatively, the lid port or the cup port may be plugged by an integrated surface created during the manufacturing of the lid portion or by a rubber plug or seal, to be described thereafter, or the entire cartridge may be kept in a sachet or packaging to be manually opened before use. The sachet or packaging may be made of a polylaminate vacuumed or filled with an inert gas under pressure (such as in Modified Atmosphere Packaging or MAP techniques).

Either the lid port or the cup port may be alternatively sealed by means of edible solid substances (e.g. polysaccharides, proteins and lipids) that are air-impermeable and water-soluble or that melt at the temperature of the inlet water.

The cartridge **1** is preferably made of polypropylene and it is manufactured using known injection moulding techniques. Anyway, this cartridge as well as any cartridge according to the invention may be made of any material such as: other thermoplastic materials, for instance PET; elastomeric-thermoplastic materials or TPEs, for instance, SANTOPRENE, i.e. a mixture of non interlaced EPDM and polypropylene; thermosetting compositions, for instance, a polyester; rubbers or elastomers, for instance, silicone or MVQ; polylaminate thermoplastic materials, for instance a composite sheet made of PE, PET and PVDC; aluminium; other polylaminate materials, for instance, a composite sheet made of PE, PET and aluminium. The cartridge **1** may also be manufactured using other techniques, such as thermoforming.

The main body of an exemplary cartridge such as the one depicted in figure 1 is, for instance, 30-35mm high and 35-40mm wide, and the lid port and the cup port are about 7-8mm high and 8-10mm wide. However, the skilled in the art readily understands that the size of the cartridges according to the invention may be different, according to the extraction requirements and the structure of the beverage extraction machine.

Having now defined the main characteristics of cartridge **1,** it can be appreciated that this cartridge eliminates the traditional contamination of the extraction chamber of a coffee machine, in that the cup port/spout **6a** acts as an outlet for directing the extracted beverage directly into an external cup that is then used for drinking. The spout **6a** is accordingly shaped so as to fit in known filter holders or so as to outwardly protrude with respect to purpose-built filter holders, thus keeping perfectly clean the internal surfaces of the filter holder and prevent the extracted beverage exiting the cartridge from contacting such surfaces.

Additionally, the small channels directly formed on the internal surface of the cup portion allow to eliminate additional fluid director members from the inside of the cartridge and advantageously combine with the cup port so as to define an integrated conveyor for the extracted beverage. At the same time, the small channels allow to keep the internal pressure level drop of the cartridge at a substantially lower value between upper zone and lower zone of the coffee cake, so that the full volume of ground coffee is exploited and the resulting beverage has enhanced organoleptic qualities.

For functional reasons, it is preferable to keep the space between the coffee cake and base of the cup portion or the lid portion as little as possible.

Another improvement involved by the particular cartridge of Figure 1 is that it is reversible, i.e. it can be inserted also upside-down. In fact, the main body of the cartridge is shaped so as to be substantially symmetrical with respect to an virtual plane perpendicular to the water injection axis. In particular, the cup port **6a** ant the lid port **6b** are substantially identical in shape and size, they are aligned on a same water injection axis and the height of flange **105a** is substantially equal to the height of the cylindrical sidewall **105b,** as illustrated in Figure 2. Advantageously, a fine canalisation is provided on both the internal surfaces of the cup portion and of the lid portion.

Accordingly, the cartridge 1 can be installed in a filtering receptacle regardless of which port will act as the inlet port and which port will act as the outlet port, thus greatly facilitating the operation of inserting the cartridge into an extraction machine.

While characteristics have been shown with reference to the exemplary embodiment of Figures 1-4, several alternative embodiments of the invention can be provided by either suitably combining the fundamental characteristics already illustrated or by adding other features still falling within the scope of the invention.

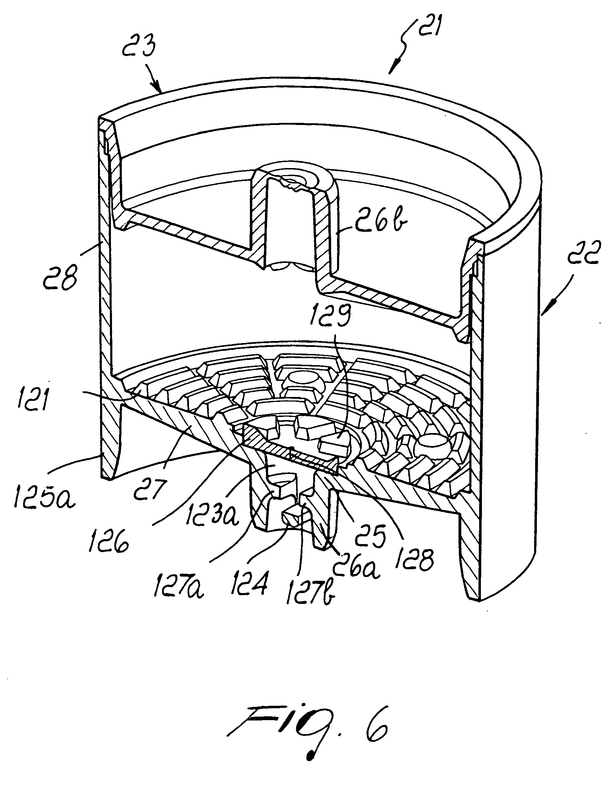

With reference to Figure 5, an example of a cartridge which, as depicted, does not form part of the invention is illustrated. In particular, Figure 5 is a cross-sectional view of a cartridge **11** which, even though the main body is externally similar to that depicted in Figure 1, features internal variants.

While only a sectional view of cartridge **11** is shown in Figure 5, it is understood that this view is taken along a virtual radial plane halving the whole actual cartridge, which is not shown in the Figures for clarity reasons. It is clear that the skilled in the art has no difficulty in picturing the structure of the whole cartridge **11** starting from the sectional view of Figure 5.

The cartridge **11** has a generally cylindrical shape and comprises a cup portion **12** and a lid portion **13.** The cup portion **12** comprises a base **17,** a sidewall **18** and a rim **19a** that is disposed substantially opposite to the base **17** and defines an open end of the cup portion **12.**

An internal volume is defined by the cup base **17,** the sidewall **18** and the lid portion **13,** when the lid portion is mounted on the open end of the cup portion **12.** A dose of ground coffee is housed in such internal volume, enclosed by filtering means either in a way similar to that depicted in Figure 2 or as in a tablet or cake of a known kind, as it will be better described hereafter.

In Figure 5, both the ground coffee and the filtering means have been omitted for simplicity, but it is intended that they substantially fill the internal volume of the cartridge, as it occurs in the embodiment of Figure 2.

The cup portion **12** comprises a cup port **16a,** preferably located in a central region of the cup base **17** and protruding outwardly with respect to the internal volume of the cartridge. The cup port **16a** has a substantially cylindrical shape and provides for open access to the internal volume of the cartridge, thus allowing passage of fluids to or from the internal volume of the cartridge. To this aim, an opening **113a** is provided on the cup base **17** in correspondence of the cup port **16a.**

The cup base **17** preferably comprises a flange **115a,** aligned with the sidewall **18** and protruding outwardly with respect to the internal volume of the cartridge.

The lid portion **13** is shaped so as to fit with the open end of the cup portion **12** and comprises a lid base **17b,** from which a substantially cylindrical sidewall **115b** extends upwardly and slightly outwardly. The sidewall **115b** ends with an annular edge **19b** that is located substantially opposite to lid base **17b** and that protrudes outwardly from the sidewall **115b,** in order to fit with and lean on rim **19a** of the cup portion **12.**

Preferably, the annular edge **19b** has a substantially stepped cross section, so as to engage with a complementary support located at the rim **19a** of the cup portion **12,** as depicted in Figure 5. Alternatively, other cross-sectional shapes of the annular edge **19b** and of the rim **19a** can be provided, as long as such shapes allow to fix the lid portion on the cup portion.

The lid portion **13** further comprises a normally closed lid port **16b,** preferably located in a central region of the base **17b** and protruding outwardly with respect to the internal volume of the cartridge **11.** The wording "normally closed" as intended herein indicates a port which is air-tight sealed before extraction and it is opened either manually by a user or automatically by the beverage extraction machine, for example by piercing the surface that plugs the port.

In the example of Figure 5, the lid port **16b** is plugged by a weakened small surface **14** that is integrated with the lid port 16b. Alternatively, the lid port may be plugged by a plastic film welded on the external mouth of the lid port or by a rubber or rubber-like plug or seal, described hereafter.

The internal surface of the lid port **16b** is substantially smooth, but fluid flow hurdles can be alternatively provided as those described with reference to the embodiment of Figure 2.

The cup portion **12** comprises a cup port **16a,** located on the cup base **17** and preferably having a substantially cylindrical shape. In the example depicted in Figure 5, the cup port **16a** is located in the central region of the base **17,** protrudes outwardly with respect to the internal volume of the cartridge **11** and comprises hurdles **114, 117a** and **117b** for breaking direct fluid flow passing through the cup port.

The first hurdle **114** is formed inside the cup port **16a** in the proximity of its output mouth so as to radially cross the internal volume of the cup port, while the second hurdles **117a** and **117b** flange out the internal surface of the cup port and face each other.

Similarly to the embodiment depicted in Figure 2, the cup portion **12** comprises a plurality of ridges **111a** that are directly formed on the internal side of the base **17** and protrude towards the internal volume of the cartridge. The ridges **111a** define a plurality of small channels **112a, 112b** between the cup base **17** and the filtering means, for conveying the extracted beverage to the cup port **16a**.

In the particular example shown in Figure 5, unlike lid portion **3,** a fine canalisation is not provided between the lid portion and the assembly consisting of the ground coffee and the filtering means. Instead, sparse ridges **111b** are provided on the bottom side of the lid portion **13,** serving the purpose of creating a very small gap between the lid portion and the ground coffee. However, in an embodiment of the invention, as an alternative to this arrangement a canalisation is provided, as described above with reference to the lid portion **3.**

Advantageously, the cartridge **11** comprises valve means, for regulating the fluid flow passage through the cup port **16a.** The valve means are particularly conceived for application to both the cup port and the lid port of a cartridge according to the invention.

In the example shown in Figure 5, the valve means lean on an annular recess **15,** that is formed around the opening **113a** and cover opening **113a.** To this aim, the thickness of the base **17** preferably tapers from the cup port **16a** towards the periphery, to allow the formation of the recess **15.**

The valve means preferably comprises a rubber (e.g. silicone rubber), rubber-like, elastomeric or plastic pad or disc having a narrow through slit or orifice formed therein connecting a top surface to a bottom surface of the pad. If no axial pressure is applied to the pad, the slit provides for an air-tight seal, whereas if an axial pressure is applied, such as the pressure of percolation fluids extracted from the ground coffee, a portion of the pad warps and the slit slightly widens, thus allowing passage of the percolation fluids, i.e. of the beverage.

According to the particular example depicted in Figure 5, the valve means comprise a rubber pad or disc **116,** leaning on the recess **15** so as to air-tightly close the aperture **113a** of the cup port and acting as a septum. While the pad **116** is described as simply leaning on the recess **15,** it may optionally be bonded to such recess or otherwise fixed using known techniques.

The pad **116** comprises a top circular surface and a bottom circular surface and a slit **118** that axially traverses the pad from the centre of the top surface to the centre of the bottom surface.

The slit **118** is a pre-pierced one and it is preferably made using a thin needle. The slit may alternatively be a radial linear or cross-shaped cut or incision, or a plurality of slits may be provided through the pad, as long as these slits, cuts or incisions do not substantially allow passage of air inside the cartridge when the cartridge is not under fluid pressure and allow passage of percolation fluids during the beverage extraction phase.

In order to provide a support for the filtering means enclosing the ground coffee and to convey the extracted beverage to the pad **116,** a shim **119** is advantageously mounted on the cup base **17** and upstream of the pad **116.**

With particular reference to the broken away view of Figure 7, the shim **119** comprises a bottom surface that faces the pad **116** and that is shaped so as to define fluid flow channels **319** between the shim and the pad: to this aim, the bottom surface of the shim **119** comprises radially oriented ridges **219.**

The top surface of the shim **119** comprises ribs for supporting the coffee-filtering means assembly, which are preferably sized so that the thickness of the shim **119** is substantially equal to the height of the ridges **111a** of the cup portion **12.**

Yet in another embodiment, the valve means do not comprise a separate shim at all. For instance, a third embodiment of the invention comprising such alternative valve means comprises only a pad or disc, made of rubber, rubber-like, elastomeric, or whichever resilient material.

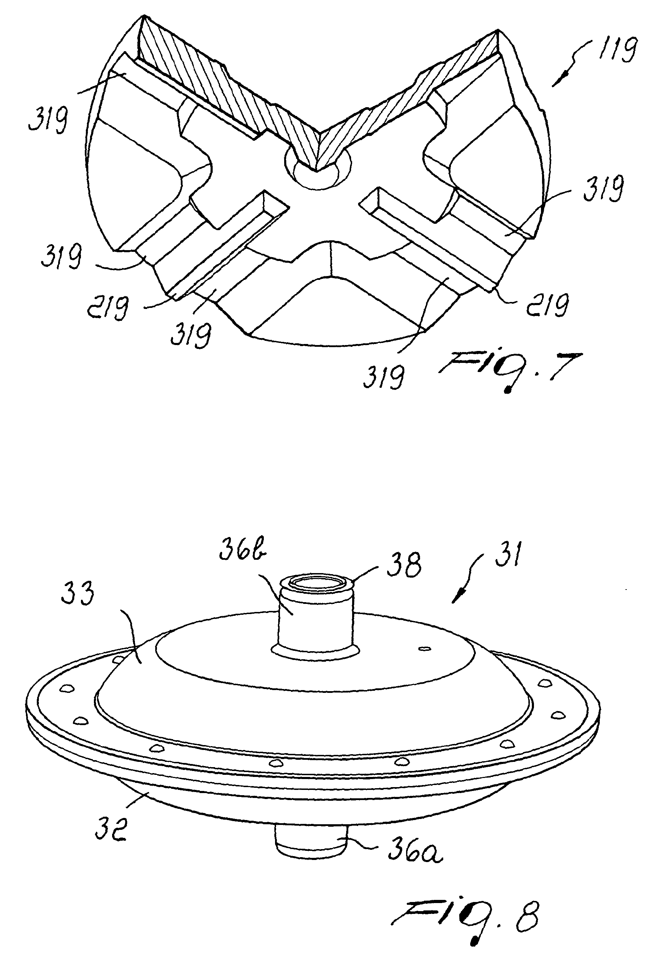

In particular, with reference to Figure 6, a cartridge **21** which does not form part of the invention but which is useful for understanding the invention, comprises a cylindrically shaped cup portion **22,** comprising a base **27,** a sidewall **28** and an open end on which a lid portion **23** is engaged so as to define an internal volume of the cartridge. Inside the cartridge, a dose of ground coffee and the corresponding filtering means are provided as in the previously described cartridges, but they are not shown in Figure 6, for simplicity.

The lid portion **23** comprises a normally closed lid port **26b** and it has substantially the same features of the already described lid portion **13.**

The cup portion **22** comprises a cup port **26a,** inside which fluid flow hurdles **124, 127a** and **127b** are provided. Moreover, the top surface of the base **27** comprises a plurality of ridges **121,** which ridges are distributed throughout the surface of the base **27** substantially as ridges **111a** and which converge to an annular recess **25.** A circular rubber pad **126** leans on the recess **25** so as to air-tightly plug the aperture **123a** of the cup port **26a.** Notwithstanding pad **126** is herein described as simply leaning on recess **25,** it may optionally be bonded to an edge of such recess or be otherwise fixed through known means.

Similarly to pad **116,** pad **126** comprises a through slit **128** at its centre, which slit is normally closed and slightly widens, thus allowing passage of the percolation fluids, during the beverage extraction phase.

In order to support the dose of ground coffee and the filtering means, the pad **126** preferably comprises ribs **129,** which are directly formed on its top surface and shaped so as to allow the passage of fluids directly deriving from the coffee/filter assembly and from the channels defined by ridges **121.**

Pads **116** and **126** have been described as being made of rubber, elastomeric or other flexible materials. The elastic properties of such materials allow a pre-pierced orifice or channel such as the slit **118** or the slit **128** to act as an air-tight seal, but at the same time allow to readily respond to pressure stresses directed either towards or from the internal volume of the cartridge. In other words, such pads act as valves or baffles.

Therefore, a cartridge comprising such pads requires no means for plugging the cup port - or the lid port, if the pad is applied to the lid port in a way similar to that described above -, such as films or pierceable diaphragms. At the same time, after the extraction phase has terminated, the sudden fall of internal pressure causes the slit to return in the initial rest condition, thus preventing possible internal fluid residuals to drip out of the cartridge.

Beyond its valve-like functioning that protects the cartridge from negative environment influences, at the same time permitting degassing of the cartridge and the extraction fluid to drop after extraction, the above described pad also allows the insertion of liquid inert gas from the outside by means of a hollow needle during the packaging phase (MAP), in order to condition the capsule and prepare it for longer storage periods. The rubber pad then closes automatically by its own elasticity after the needle has been pulled out. The same needle may be the one that pierces the pad so as to form the slit referred to above.

At the same time, another important advantage brought by pads according to the invention is the great improvement in the forming and stability of the appreciated cream layer on top of the extraction beverage, which is usually identified with the Italian term "crema" when referred to espresso coffee extraction methods.

The espresso extraction method results in a polyphasic beverage constituted by a foam layer of small bubbles with dispersed fine particles that create the typical and particular tiger-tail pattern on top of an emulsion of microscopic oil droplets in an aqueous multi-component solution with dispersed gas bubbles and solid particles.

The foam formation is related to surfactants naturally present in coffee and to a number of phenomena which are triggered by espresso extraction methods.

The supernatant foam of espresso coffee or crema is an extremely important organoleptic characteristic and represents a mark of distinction between espresso coffee and other preparations.

It is well known that the foam characteristics are the signature of a perfect preparation, being any error (for instance in coffee grinding, water temperature, water pressure, percolation time and/or beverage volume, etc) or any change (coffee blend, roasting, etc.) immediately denounced by the colour, the texture and the persistence of espresso foam.

As described above, the valve means according to the preferred embodiment of the invention comprise at least a rubber or rubber-like pad or disc having a through slit whose diameter is very small, e.g. in the order of 0,1 to 0,5 mm when it is opened. Forcing the extracted coffee through it has been found to greatly increase the density and the stability of the crema. This effect is a very advantageous one since, through the integration of a means of a relatively light weight and of simple nature, it is possible to achieve an important effect that characterizes the quality of an espresso coffee beverage.

Moreover, since the rubber pad for crema formation is integrated with the cartridge, which is generally a disposable one, it is guaranteed that the extracted espresso coffee has a layer of crema of the best quality, contrary to the known espresso coffee machines in which the devices that enhance the formation of crema are part of the machines, they are used for a great number of extraction processes and may deteriorate the quality of the extracted coffee over time.

Cartridges according to the invention are not to be limited to the substantially cylindrical cartridges described here above. Particularly, the term "cylinder" has to be read in a broad general meaning and indicates the surface traced by any line moving parallel to a fixed axis and intercepting a closed line. For instance, the main body of the cartridge according to particular embodiments of the invention can be either parallelepiped-shaped or discoid-shaped, too. Furthermore, the term "substantially cylindrical" also indicates cylindrical cartridges having a slight frustum shape, that is to say, for instance, the slope of the sidewall of a cartridge according to the invention can deviate for 1-2 degrees from a perfect cylindrical surface.

A parallelepiped-shaped cartridge, not shown in the Figures, is particularly a preferred one when small space occupancy is required.

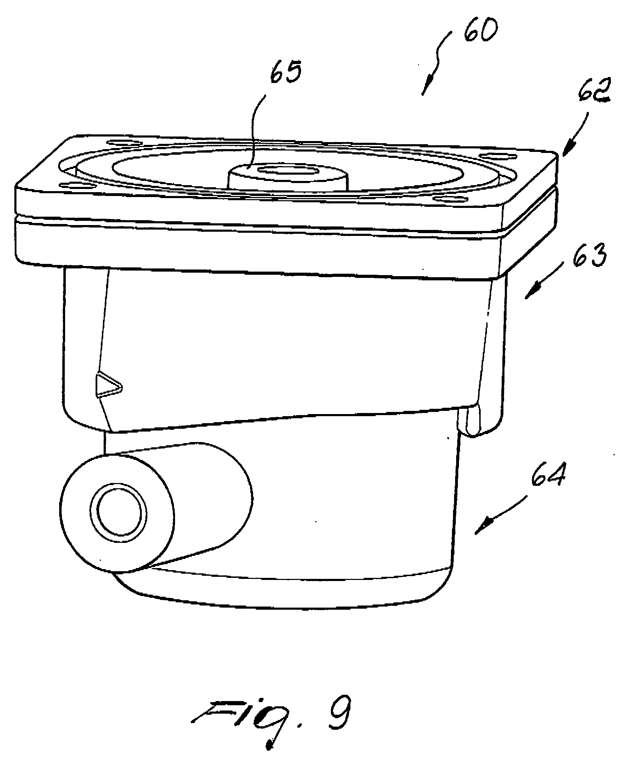

A discoid-shaped cartridge, instead, can be advantageously provided in the alternative for other reasons, which will be now explained. An exemplary embodiment of the invention in which the main body of the cartridge is substantially discoid-shaped is depicted in Figure 8. A cartridge **31** of this kind embodies some of the features of the above cartridges, in particular it comprises a cup portion **32** and a lid portion **33,** both of them having substantially the shape of a dish.

The cup portion **32** comprises a base, an annular sidewall and a flanged rim that is directed substantially parallel to the base and, similarly, the lid portion **33** comprises a base, a sidewall and a flanged rim that is shaped so as to engage with the rim of the cup portion, thus defining an internal volume of the cartridge. The internal volume of the cartridge is shaped so as to fully house a ground coffee tablet or cake of a known kind, such as the tablet called E.S.E.^{®}.

Such known tablet comprises a dose of ground coffee encapsulated within a filter paper sachet, whose peripheral edge is tightly retained by the above rims when the cartridge **31** is in the assembled condition. The Rims may be reciprocally fixed using any known method such as ultrasonic welding, hot element welding, or other welding techniques, gluing or combinations of these with common border forging or deforming methods,

The cup portion **32** further comprises a substantially cylindrical cup port **36a** protruding outwardly with respect to the internal volume of the cartridge **31.**

A lid port **36b** protrudes from the central region of the lid portion **33**.

The cartridge **31** is particularly advantageous in that it is fully compatible with existing coffee tablets. The manufacturing process of this cartridge is also sped up, since no further filtering means have to be inserted into the cartridge.

Moreover, it is seen that the cartridge **31,** as well as the other cartridges described above, is an all-in-one cartridge, that is to say a cartridge in which most of functional features of standard espresso coffee machine, such as filtering, water distribution, crema enhancement and beverage delivery are integrated into the cartridge itself. The espresso coffee machine functions are mainly to support the cartridge and to inject water under pressure inside it.

Figure 17 depicts a cartridge **81** which, as it is depicted, does not form part of the invention, but which is useful for understanding the invention. This cartridge comprises features substantially corresponding to those of cartridge **21,** that is to say a cylindrical cup portion **82a** whose base **87a** comprises a plurality of ridges **181** and channels **182** directly formed thereon and an externally protruding cup port **86a,** a lid portion **83a** being fixedly attached to the upper rim of the cup portion **82a** so as to define an internal volume in which a cake of ground coffee and filtering means (not shown) are housed.

The lid portion **83a** comprises a base **87b,** on which sparse ridges are formed similar to ridges **111b**, and comprises a normally closed lid port **86b,** which is preferably located in a central region of the base **87b** and protrudes outwardly with respect to the internal volume of the cartridge **81.** The lid port **86b** is plugged by an aluminium or polylaminated plastics film.

The internal surface of the lid port **86b** is substantially smooth and a cross-shaped fluid flow hurdle **89** quarters the opening **183b** from which the lid port **86b** protrudes. The hurdle **89** preferably protrudes towards the internal volume of the cartridge, so that the filtering means that covers the cake of particulate substance is kept at a distance away from the base **87b** of the lid portion **83a.**

The diameter of the lid port **86b** is generally wider than the ones of the other lid ports described above, in order to completely receive a water injection nozzle without the need of using a needle for accessing the internal volume of the cartridge. The internal diameter of the lid port is preferably at least 5mm wide, but such diameter may be even wider, e.g. it may be substantially equal to the diameter of the lid base **87b.**

The ridges **181** of base **87a** surround a central annular recess **85a** formed around the opening **183a** from which the cup port **86a** protrudes. The ridges that closely surround the opening **183a** comprise projections **184** that radially extend towards the center of the opening **183a** and that are as thick as the ridges **181** themselves. The projections **184** act both as a support for the cake of particulate substance and the filtering means and as a fluid flow hurdle for breaking direct fluid flow.

The cartridge **81** further comprises a rubber pad **186,** which is installed between the projections **184** and the annular recess **85a** and which comprises a central through slit. The rubber pad **186** is a valve means as intended above.

The cup port **86a** advantageously comprises a fluid flow hurdle **187,** which is a separate piece that is inserted into the cup port and is tightly engaged with the internal surface of the cup port. Providing a separate fluid flow hurdle and eliminating the hurdles directly formed on the internal surface of a port is an advantageous arrangement that is particularly suited for the so-called sequential moulding manufacturing techniques.

The "separate" hurdle **187** preferably comprises a small plastic hollow tube **188** whose open ends are closed with a fluid permissive filter material, for instance a film of plastic sieve material or open mazed tissue/paper. Alternatively, internal barriers can be formed on the internal surface of the tube **188,** which are substantially similar to barriers **114, 117a** and **117b** described above.

In the cartridge depicted in Figure 17, the tube **188** comprises an upper sieve film **185b** and a bottom sieve film **185a.** In order to fix the hurdle **187** to the inner surface of cup port **86a,** the tube **188** comprises an annular rib **189a** on its outer sidewall for snap-fitting with a corresponding annular recess **189b** formed around the inner surface of the cup port **86a.** Obviously, many other arrangements for fixing a separate hurdle means to the cup port or the lid port are clearly in the reach of the skilled in the art.

Various embodiments of the cartridge according to the invention have been described hereinabove. According to a second aspect of the invention, an extraction assembly for application to standard espresso coffee machine or to another machine which can pump hot water or other infusion fluids under pressure for producing beverages will be now described in detail.

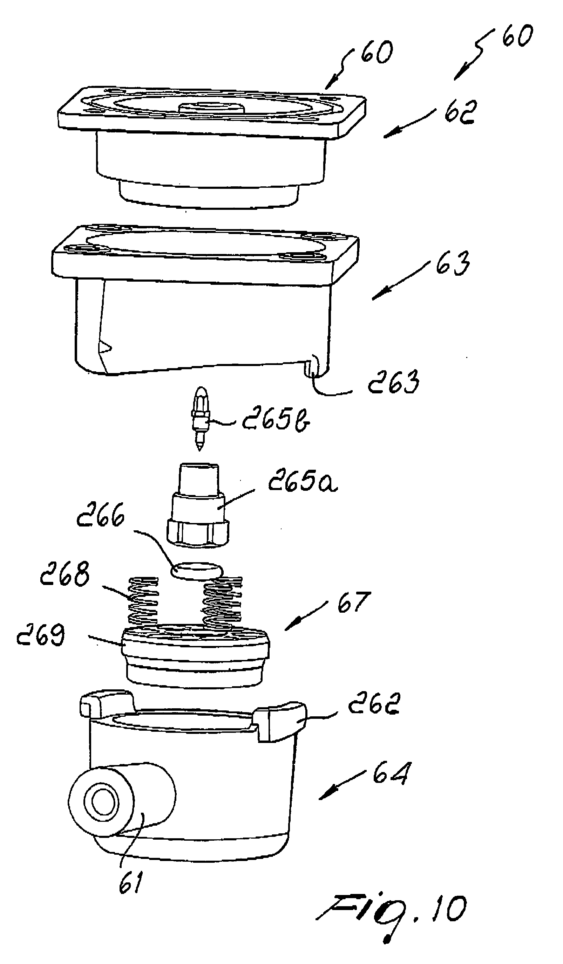

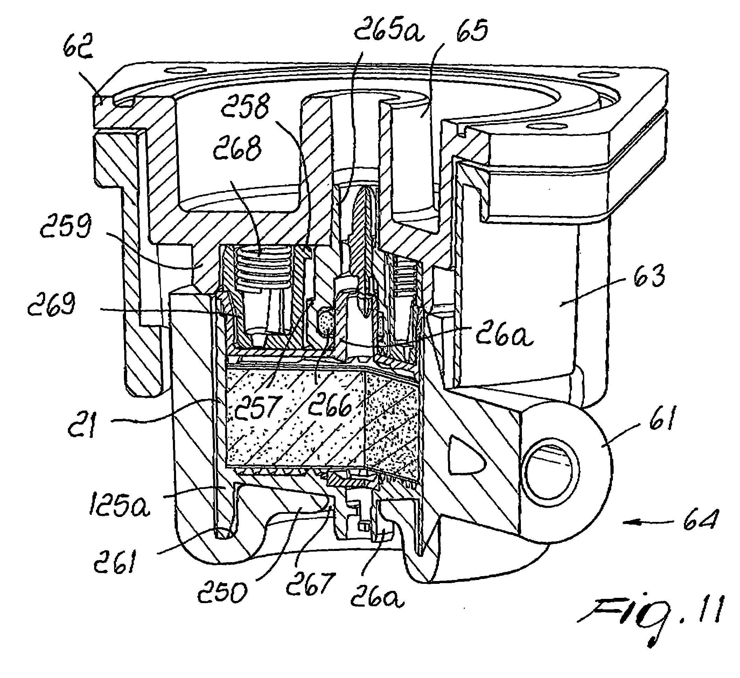

With reference to Figures 9-11, an extraction assembly **60** according to a preferred embodiment of the invention comprises a support connectable to an espresso coffee machine, which is preferably composed of a connector member **62,** for connecting the extraction assembly to the water injection tube of the beverage extraction machine, and a bayonet holder **63.**

The connector member **62** has a base and a cylindrical sidewall raising from the base and ending with a flanged rim that serves for mounting the support on the extraction machine (not shown), for instance by using screws. The base of the connector member **62** comprises a protruding inlet port **65** connectable to the water outlet of the extraction machine and, on the opposite side of the base, a circular guiding wall **259,** which is described hereinafter.

The bayonet holder **63** has a substantially cylindrical shape and comprises an upper open end into which the cylindrical sidewall of connector member **62** fits. Preferably, the bayonet holder **63** is fixed to the connector member **62** by means of the same screws used for mounting the connector member to the extraction machine. Obviously, the bayonet holder and the connector member may be reciprocally fixed in any other known way; for instance, the outer surface of the cylindrical sidewall of the connector member and the upper inner surface of the cylindrical sidewall of the bayonet holder may be threaded. Alternatively, the connector member and the bayonet holder may be built as a single piece.

The bayonet holder **63** further comprises a bottom open end on which guides **263** of a known kind are provided for bayonet fitting with a cartridge holder **64,** which is provided with a grip handle **61.**

The cartridge holder **64** comprises a substantially cylindrical body that is internally shaped so as to completely house the cartridge **21.** In particular, it comprises a cylindrical sidewall that is complementary to the sidewall **28** of the cartridge.

Moreover, the base of the cartridge holder **64** comprises an annular groove **261,** into which the flange **125a** of the cartridge fits slidingly, and a bottom **250,** which is located inside the cylindrical body of the cartridge holder and comprises an opening **267** at its central region.

The depth of the annular groove **261** is substantially equal to the height of the flange **125a,** so that when cartridge **21** is inserted into the cartridge holder **64,** the surface of the base **27** leans almost completely against the bottom **250** and the cup port **26a** protrudes from the opening **267.**

The extraction assembly **60** further comprises an injection nozzle assembly **265a, 265b** that is firmly mounted on the bottom open end of the inlet **65** facing the cartridge holder, for instance by a thread fitting. Alternatively, the nozzle assembly and the water inlet port **65** may be made in a single piece.

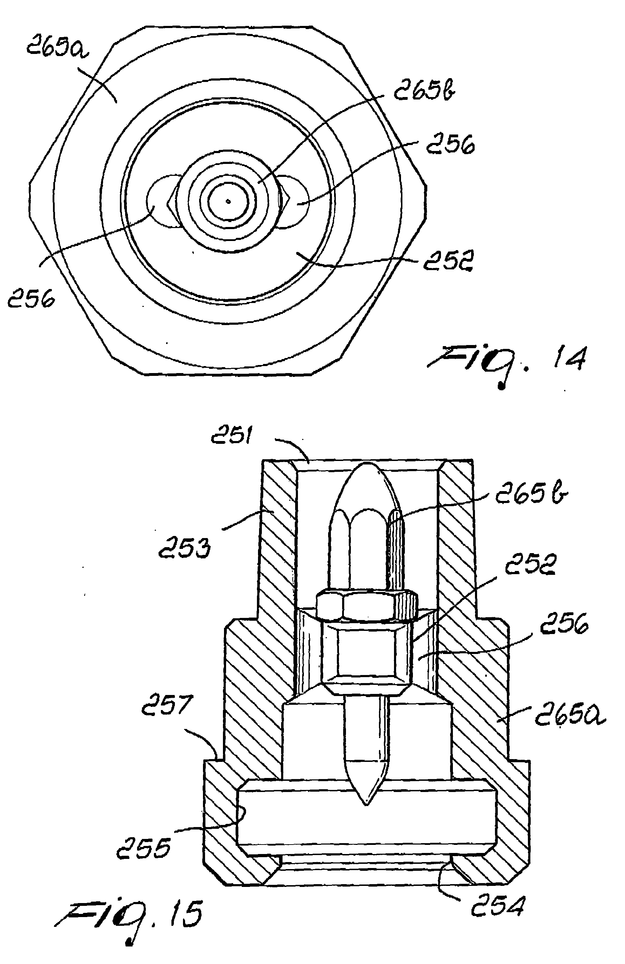

With reference to Figures 14 and 15, the nozzle assembly comprises a hollow nozzle body **265a** and a piercing member or needle **265b** fixedly mounted to the inner surface of the nozzle body. More in detail, the nozzle body is substantially tubular and comprises two open ends **251** and **254.**

The open end **254** is located at the bottom end of the nozzle body and it is wide enough to receive a projecting lid port of a cartridge according to the invention, for instance lid port **26b.**

The open end **251** is defined at the upper end of the nozzle body by the wall **253,** which is shaped so as to tightly fit with the inner surface of the bottom open end of the inlet **65.** The external surface of the upper wall **253** and the internal surface of the inlet **65** may be threaded so as to secure the nozzle body to the connector member **62.** Alternative arrangements for coupling the nozzle assembly to the inlet of the connector member may be also provided, as long as a fluid tight fit is guaranteed between them.

The external surface of the nozzle body **265a** comprises a radially protruding stepped portion **257** for limiting the axial displacement of a cartridge ejector **269,** as described below. The internal surface of nozzle body **265a,** instead, comprises an annular projection **252** that extends inwardly and which is preferably located in a middle region of the internal surface of the nozzle body.

The needle **265b** is axially inserted and secured in the opening defined by annular projection **252.** In order to allow passage of fluid from the upper open end **251** to the bottom open end **254,** through openings **256** are provided in the annular projection **252.**

The internal surface of the nozzle body **265a** further comprises an annular recess **255,** which is located in a bottom region of the same internal surface, preferably around the bottom open end **254.** Such recess houses an O-ring **266,** which acts as a means for providing a radial fluid-tight seal between the nozzle assembly and the inlet port **26b** of the cartridge **21** during the beverage extraction phase.

A great advantage brought about by the O-ring **266** is that it prevents the injected water from contaminating any internal component or surface of the extraction assembly **60** and from lapping the outer surface of the cartridge, which has to be touched and handled by the user. Accordingly, superior hygienic conditions are guaranteed and the extraction machine can be used hundreds of times without having to clean the components of the extraction assembly, such as the cartridge holder **64** and the support **62, 63.**

Such a contamination-free arrangement also advantageously combines with the integration of an outlet spout in the cartridge according to the invention. The same beverage extraction machine and the same extraction assembly can be consecutively used for cartridges containing different edible substances, such as coffee, chocolate, tea or herbal infusions, soups, other hot milk beverages, without incorporating the main disadvantage of common systems that contaminate and negatively influence the extraction results of consecutive beverage extractions.

Moreover, the resilient nature of the O-ring **266** allows to use various cartridges having inlet ports of different radial sizes, as long as these radial sized do not exceed the average diameter of the bottom opening **254** of the nozzle assembly.

In order to enhance the practicality of the extraction assembly, a cartridge ejector **269** is mounted in the annular space defined by the guiding wall **259** and the portion of the nozzle body **265a** protruding out of the water inlet **65.** The cartridge ejector **269** is substantially toroidal and is preferably shaped so as to fit into the annular space defined by the guiding wall **259,** the base of connector member **62,** the lid portion of the cartridge and the portion of nozzle body **265a** protruding out of the water inlet **65** during the extraction phase.

The cartridge ejector **269** comprises a plurality of springs **268** located in respective hollow housings having an open end from which the springs can extend. The springs **268** abut against the base of the connector member **62** and against respective abutment surfaces provided inside the hollow housings of the cartridge ejector.

When the cartridge holder **64** is fixed to the bayonet holder **63,** the ejector **269** is pushed towards the base of the connector member **62** and the springs **268** are compressed. As it is seen in Figure 11, in this position the lid port **26b** is pierced by the needle **265b** and water can be injected inside the cartridge as described above.

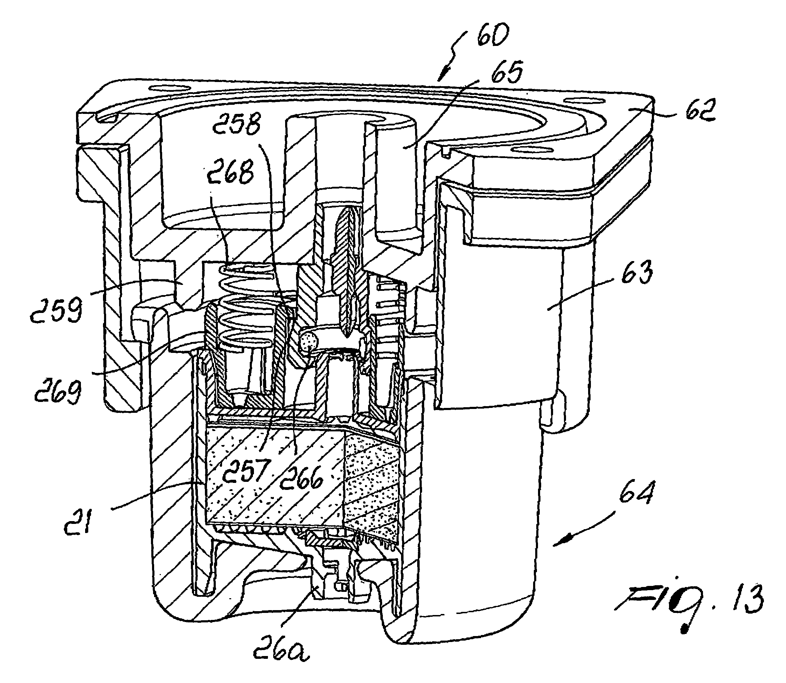

As soon as the cartridge holder is removed, the ejector **269** keeps the cartridge **21** inside the cartridge holder **64,** as it is seen from Figure 13. In order to stop the ejector's travel when the cartridge holder is released, an annular projection **258** is provided around the internal surface of the toroidal body of the cartridge ejector, which abuts against the stepped portion 257 of the nozzle body **265a** when the ejector slides downwardly towards the cartridge holder.

While a particular embodiment of an extraction assembly for an espresso coffee machine has been described with reference to a cartridge of the kind shown in Figure 6, it is understood that any equivalent extraction assembly can be provided that is particularly suited for any cartridge according to the invention.

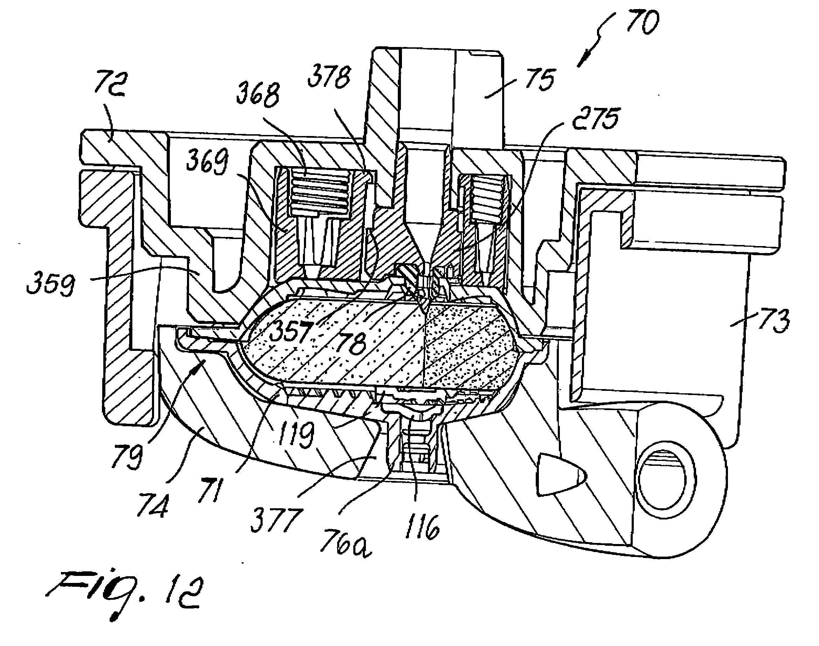

For instance, with reference to Figure 12, a particular extraction assembly **70** suited for a discoidal cartridge **71** according to the invention can be designed, according to the above teachings.

The discoidal cartridge **71** has not been described in detail so far, but it is immediately derivable by combining features of embodiments of the cartridge according to the invention which have already been described in detail. This combination is hereby presented to show that elements from different embodiments may be combined to obtain further embodiments that clearly fall under the same inventive concept and which are clearly in the reach of the skilled in the art.

The cartridge **71** incorporates features of cartridges **11, 31** and **41.** In detail, it has a general discoidal shape and houses a coffee tablet of a known kind, as cartridge **31.** The cup portion of cartridge **71** is similar to the cup portion **37,** but comprises a shim **119** and a rubber valve or pad **116** of the kind used in cartridge **11;** the pad **116** is depicted in a deformed condition, which is reached during the extraction phase. Differently form cartridge **31,** the lid port only slightly protrudes with respect to the lid portion and it is closed by a rubber plug or seal **78,** identical to the plug **48** used in cartridge **41.**

Accordingly, the extraction assembly **70** comprises a support connectable to an espresso coffee machine, which is preferably composed of a connector member **72,** for connecting the extraction assembly to the water injection tube of the beverage extraction machine, and a bayonet holder **73.**

The connector member **72** comprises a water inlet port **75,** for connection to a water injection port of a beverage extraction machine, and a annular wall **359** protruding towards the internal volume of the bbayonet holder **73** when this is mounted on the connector member.

The bayonet holder **73** has a substantially cylindrical shape and comprises an upper open end into which the annular wall **359** of the connector member **72** fits. Preferably, the bayonet holder **73** is fixed to the connector member **72** by means of the same screws used for mounting the connector member to the extraction machine. Obviously, the bayonet holder and the connector member may be reciprocally fixed in any other known way; for instance, the outer surface of the cylindrical sidewall of the connector member and the upper inner surface of the cylindrical sidewall of the bayonet holder may be threaded. Alternatively, the connector member and the bayonet holder may be built in a single piece.

The bayonet holder **73** further comprises a bottom open end on which guides **263** of a known kind are provided for bayonet fitting with a cartridge holder **74.**

The cartridge holder **74** comprises a substantially flattened body whose internal shape is complementary to the cup portion of cartridge **71.** Moreover, the base of the cartridge holder **74** comprises an opening **377** at its central region through which a cup port **76a** of cartridge **71** is arranged.

When the cartridge holder **74** is firmly secured to the bayonet holder **73,** the peripheral flat rim **79** of cartridge **71** is tightly kept between the annular wall **359** and the rim of cartridge holder **74.**

The extraction assembly further comprises a nozzle **275** that is secured to the inlet port **75** and that protrudes towards the cartridge holder.

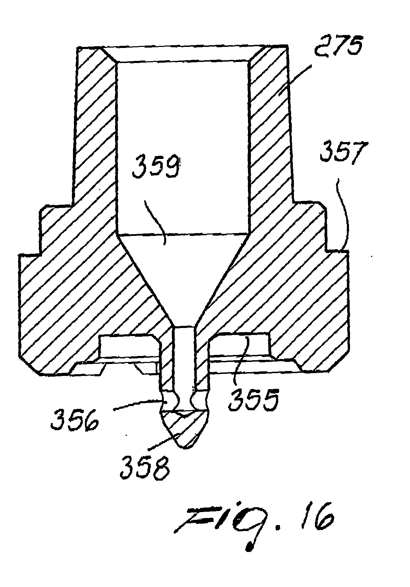

Referring to Figure 16, the nozzle **275** is a substantially cylindrical hollow piece having an inner axial cavity **359** for receiving water from the water inlet **75** and having a needle or piercing member **358** integrated therein. The cavity **359** extends as far as the needle, which is axially hollow and comprises radial through openings **356** for supplying water in a substantially radial direction.

An annular recess **355** is further provided in the nozzle **275,** in particular around the needle **358.** The recess **355** is shaped so as to receive the thicker peripheral portion of the plug **78** as soon as the cartridge holder **74** is secured to the bayonet holder **73.** As it is noted from Figure 19, in this position the plug **78** is pierced by the needle **358,** so that water can be injected inside the cartridge, and the plug **78** provides for a fluid-tight seal between the nozzle **275** and the lid port of cartridge **71.**

Therefore, the plug **78** acts as a means for providing radial fluid-tight seal between the water inlet port of the extraction assembly and the cartridge, cartridge, thus preventing the injected water from lapping the external surface of the cartridge.

Advantageously, the extraction assembly **70** comprises a cartridge ejector **369** that is housed in the annular space defined by the wall **359** and the nozzle **275** and that is similar to the ejector **269.**

When the cartridge holder **74** is fixed to the bayonet holder **73,** the ejector **369** is pushed upwardly towards the connector member **72** by means of springs **368,** which are accordingly compressed. Instead, when the cartridge holder **74** is removed from the bayonet holder **73,** the ejector **269** keeps the cartridge **71** inside the cartridge holder **74.** In order to stop the ejector's travel when the cartridge holder is released, an annular projection **378** is provided around the internal surface of the toroidal body of the cartridge ejector **369,** which abuts against the stepped portion **357** of the nozzle body **275** when the ejector slides downwards towards the cartridge holder.

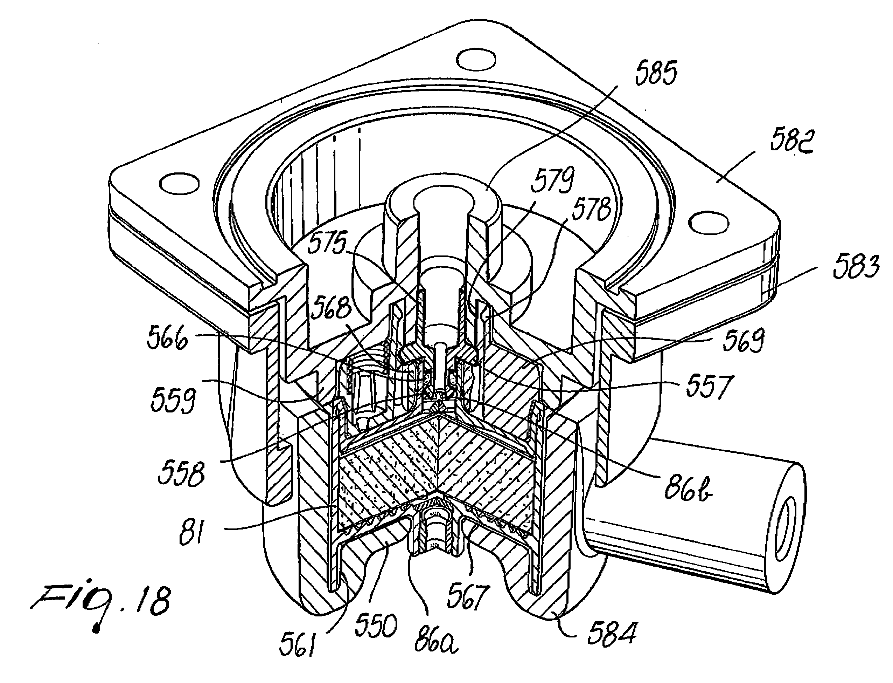

The above extraction assemblies comprise an injection nozzle that is provided with a needle for breaking the plug or seal of the upper port of the cartridge and for accessing the internal volume of the cartridge. Moreover, the upper ports of the above cartridges are sized so as to be insertable into a corresponding female nozzle. However, it is possible to provide an opposite coupling between the injection nozzle and the upper port of a cartridge without departing from the scope of the present invention. For instance, with reference to Figure 18, an extraction assembly according to another embodiment of the invention comprises a support connectable to an espresso coffee machine, which is preferably composed of a connector member **582,** for connecting the extraction assembly to the water injection tube of the beverage extraction machine, and a bayonet holder **583.**

The connector member **582** has a base and a cylindrical sidewall raising from the base and ending with a flanged rim that serves for mounting the support on the extraction machine (not shown), for instance by using screws. The base of the connector member **582** comprises a protruding inlet port **585** connectable to the water outlet of the extraction machine and, on the opposite side of the base, a circular guiding wall **559.**

The bayonet holder **583** has a substantially cylindrical shape and comprises an upper open end into which the connector member **582** fits. Preferably, the bayonet holder **583** is fixed to the connector member **582** by means of the same screws used for mounting the connector member to the extraction machine, as in the embodiments described here above. Obviously, the bayonet holder and the connector member may be reciprocally fixed in any other known way; for instance, the outer surface of the cylindrical sidewall of the connector member and the upper inner surface of the cylindrical sidewall of the bayonet holder may be threaded. Alternatively, the connector member and the bayonet holder may be built as a single piece.

The bayonet holder **583** further comprises a bottom open end on which guides of a known kind are provided for bayonet fitting with a cartridge holder **584.**

The cartridge holder **584** comprises a substantially cylindrical body that is internally shaped so as to completely house the above described cartridge **81.** In particular, it comprises a cylindrical inner sidewall that is complementary to the sidewall of the cartridge.

Moreover, the base of the cartridge holder **584** comprises an annular groove **561** into which the lower flange of the cartridge **81** fits slidingly, and a bottom **550** that is located inside the cylindrical body of the cartridge holder and that comprises an opening **567** at its central region. The annular groove **561** and the bottom **550** are shaped so that when the cartridge **81** is inserted into the cartridge holder **584,** the surface of its base **87a** leans almost completely against the bottom **550** and the cup port **86a** protrudes from the opening **567.**

The extraction assembly of Figure 18 further comprises an injection nozzle **575** that is firmly mounted on the bottom open end of the inlet **585** facing the cartridge holder, for instance by a thread fitting. Alternatively, the nozzle assembly and the water inlet port **585** may be made in a single piece.

The nozzle **575** comprises a hollow cylindrical body with opposite open ends and comprises a flange **557** in a middle region thereof.

A hollow tip end **558** of a substantially cylindrical shape protrudes axially from the flange **557** of the nozzle towards the cartridge holder and it is shaped so as to have an external diameter that is generally smaller than the inner diameter of the lid port **86b.** Accordingly, the tip end **558** can be completely inserted into the lid port when the cartridge holder **584** is fixedly mounted on the bayonet holder **583,** thanks to the appositely wide lid port **56b.**

The tip end **558** is substantially wider than a (common) injection needle, but it is small enough to be insertable as a male part into a cartridge port such as the lid port **86b.** Advantageously, the tip end **558** comprises an annular recess formed around its external surface, for housing a sealing means such as an O-ring **566.**

Advantageously, the extraction assembly comprises a toroidal cartridge ejector **569,** which is housed in the annular space defined by the wall **559** of the connector member and the nozzle **575** and which is similar to the other cartridge ejectors described here above.

The axial travel of the ejector **569** is limited by means of common snap-brackets **578,** which extend upwardly and which are slidingly inserted into an appropriate annular recess **579** surrounding the nozzle **575.** The limit stop for the snap-brackets **578** is defined by the flange **557** of the nozzle **575.**

Advantageously, the toroidal cartridge ejector **569** comprises an inner concentric sidewall **568** that is sized so as to define an annular gap between the tip end **558** of the injection nozzle, which gap is completely filled with the sidewall of the lid port **86b** when the cartridge **81** is mounted into the extraction assembly. Therefore, in the particular arrangement depicted in Figure 28, the cartridge ejector acts also as a retaining wall against a possible expansion of the lid port during the extraction phase.

The extraction assembly of Figure 18 benefits of a simple arrangement that eliminates piercing needles and, at the same time, guarantees a contamination-free coupling between the cartridge, the extraction chamber and the water injection chamber. In fact, regardless of whether the lid port is closed or not before installing it into the extraction assembly, the injection nozzle acts as a male part and the lid port as a female part, and the injection nozzle can pierce the upper seal, if any, of the lid port without the need of an appropriate needle.

The injection portion **575, 585** of the extraction assembly is kept insulated from the extraction chamber defined by the cartridge by means of an external O-ring, and a very high number of consecutive extraction processes of the same or different beverages can be carried out without cleaning or servicing in any way the extraction assembly.

Moreover, the external O-ring **566** of the injection nozzle can be easily replaced or serviced without having to access internal parts of the injection nozzle itself.

It has thus been shown that the present invention fulfils the proposed aim and objects. Clearly, several modifications to either the cartridges and the extraction assemblies according to the invention will be apparent to and can be readily made by the skilled in the art without departing from the scope of the present invention, as defined by the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cartridge (1) for extracting a beverage from a particulate substance (4) contained therein by means of water under pressure, the cartridge comprising:
a main body comprising a cup portion (2) and a lid portion (3), the cup portion comprising a base (7), a sidewall (8) and a rim (9a) opposed to said base, the lid portion (3) being fixedly attached to said rim (9a) of the cup portion so as to define an internal volume of said cartridge;
the internal volume of said cartridge housing the particulate substance (4) comprised within filtering means (5a, 5b) for retaining said particulate substance and for percolating fluid substances therethrough,
said lid portion (3) comprising a lid port (6b) defining a first passage for percolation fluid substances, the base (7) of said cup portion comprising a cup port (6a) defining a second passage for percolation fluid substances,
the lid port (6b) and the cup port (6a) being substantially aligned on a water injection axis,
**characterized in that** said main body is shaped so as to be substantially symmetrical with respect to a plane perpendicular to said water injection axis, so that the cartridge (1) is usable regardless of which port will operate as an inlet port for receiving water and regardless of which port will operate as an outlet port for ejecting the extracted beverage.

2. The cartridge according to claim 1, **characterized in that** said base (7) comprises a plurality of ridges (101a) directly formed thereon and protruding towards the internal volume of the cartridge, so as to support said filtering means (5a, 5b) and said particulate substance (4) and to form a fine canalization for putting in a fluid communication said filtering means and said particulate substance with said cup port (6a).

3. The cartridge according to any one of the preceding claims, **characterized in that** said cup port (6a) and said lid port (6b) protrude respectively from said cup portion (2) and said lid portion (3) outwardly with respect to said internal volume.

4. The cartridge according to any one of the preceding claims, **characterized in that** said cup port and said lid port comprise fluid flow hurdles (107a, 107b) formed on their internal surface or mounted therein, for breaking direct fluid flow passing through said cup port and said lid port, respectively.

5. The cartridge according to any one of the preceding claims, **characterized in that** said lid portion (3) comprises a plurality of ridges (101b) directly formed on its inner side and protruding towards the internal volume of the cartridge, so as to support said filtering means (5a, 5b) and said particulate substance (4) and to form a fine canalization for putting in a fluid communication said filtering means and said particulate substance with said lid port.

6. The cartridge according to claim 1, **characterized in that** said lid portion comprises sparse ribs directly formed on its inner side and protruding towards the internal volume of the cartridge, so as to create a small gap between said lid portion and said filtering means.

7. The cartridge according to any one of the preceding claims, **characterized in that** said cup port and said lid port comprise valve means (126) resiliently openable under pressure of said percolation fluid substances so as to allow passage of said percolation fluid substances.

8. The cartridge according to claim 7, **characterized in that** said valve means (126) comprise a pad or disc of a resilient material selected from the group comprising rubbers, elastomers, flexible plastics, said pad or disc comprising a through slit (128) that is normally closed, for insulating the internal volume of said cartridge from external environment and for retaining fluid residuals inside said internal volume when said beverage extraction has been terminated.

9. The cartridge according to claim 7, **characterized in that** said valve means (126) in their opened condition, allow passage of said percolation fluid substances through at least a narrow orifice, for increasing the formation and stability of crema in the beverage extracted from said cartridge when said particulate substance comprises coffee.

10. The cartridge according to any one of the preceding claims, **characterized in that** said main body has a substantially cylindrical shape.

11. The cartridge according to any one of the preceding claims, **characterized in that** it is made of any material selected from the following: thermoplastics, aluminum, rubber, polylaminate plastics, thermosetting compositions, and any combination thereof.

12. The cartridge according to any one of the preceding claims, **characterized in that** said particulate substance (4) is selected from the group comprising: ground coffee, roasted ground coffee, instant coffee, tea, powdered chocolate, powdered milk, instant based brews, soups.

13. The cartridge according to any one of the preceding claims, **characterized in that** the lid port (6b) or the cup port (6a) are sized so as to be wider than a water injection nozzle of a beverage extraction machine, so that said lid port or said cup port can receive such nozzle therein during a beverage extraction phase,

14. An extraction assembly (60) to be mounted on beverage extraction machines, **characterized in that** it comprises a support connectable to a water outlet of a beverage extraction machine and a cartridge holder (63) securable to said support and holding a cartridge according to claim 1.

## Patentansprüche

1. Kartusche (1) zum Extrahieren eines Getränkes aus einer Pulversubstanz (4), die darin enthalten ist, mittels unter Druck stehenden Wassers, die Folgendes aufweist:
eine Haupthülle mit einem Becherbereich (2) und einem Deckelbereich (3), wobei der Becherbereich eine Grundfläche (7), eine Seitenwand (8) und einen Rand (9a) aufweist, der der Grundfläche gegenüberliegend angeordnet ist, und der Deckelbereich (3) fest an dem Rand (9a) des Becherbereiches befestigt ist, um ein inneres Volumen der Kartusche zu definieren,
das innere Volumen der Kartusche, das die Pulversubstanz (4) enthält, die zwischen Filtereinrichtungen (5a, 5b) zum Zurückhalten der Pulversubstanz und zum Durchsickern fluider Substanzen **dadurch** angeordnet ist,
den Deckelbereich (3) mit einem Deckelanschluss (6b), der einen ersten Durchlass zum Durchsickern fluider Substanzen definiert, wobei die Grundfläche (7) des Becherbereiches einen Becheranschluss (6a) aufweist, der einen zweiten Durchlass zum Durchsickern fluider Substanzen definiert,
den Deckelanschluss (6b) und den Becheranschluss (6a), die im Wesentlichen an einer Wassereinspritzachse ausgerichtet sind,
**dadurch gekennzeichnet, dass** die Haupthülle derart geformt ist, um im Wesentlichen symmetrisch in Bezug auf eine zur Wassereinspritzachse senkrechte Ebene zu sein, so dass die Kartusche (1) ist unabhängig davon, welcher Anschluss als ein Einlassanschluss zum Aufnehmen von Wasser dient, und unabhängig davon verwendbar, welcher Anschluss als ein Auslassanschluss zum Ausspritzen des extrahierten Getränkes dient.

2. Kartusche nach Anspruch 1, **dadurch gekennzeichnet, dass** die Grundfläche (7) eine Vielzahl an Leisten (101a) aufweist, die direkt darauf ausgebildet sind und zu dem inneren Volumen der Kartusche vorstehen, um die Filtereinrichtungen (5a, 5b) und die Pulversubstanz (4) zu tragen und um eine dünne Kanalisation zu bilden, um die Filtereinrichtungen und die Pulversubstanz mit dem Becheranschluss (6a) in eine Fluidkommunikation zu setzen.

3. Kartusche nach einem der vorstehenden Ansprüche, **dadurch gekennzeichnet, dass** der Becheranschluss (6a) und der Deckelanschluss (6b) von dem Becherbereich (2) bzw. dem Deckelbereich (3) in Bezug auf das innere Volumen nach außen hervorstehen.

4. Kartusche nach einem der vorstehenden Ansprüche, **dadurch gekennzeichnet, dass** der Becheranschluss und der Deckelanschluss Fluidflusshürden (107a, 107b), die an deren Innenfläche ausgebildet oder darin befestigt sind, zum Unterbrechen des direkten Fluidflusses aufweisen, der durch den Becheranschluss bzw. den Deckelanschluss hindurchfließt.

5. Kartusche nach einem der vorstehenden Ansprüche, **dadurch gekennzeichnet, dass** der Deckelbereich (3) eine Vielzahl an Leisten (101b) aufweist, die direkt auf dessen Innenseite ausgebildet sind und zu dem inneren Volumen der Kartusche hervorstehen, um die Filtereinrichtungen (5a, 5b) und die Pulversubstand (4) zu tragen und um eine dünne Kanalisation zu bilden, um die Filtereinrichtungen und die Pulversubstanz mit dem Deckelanschluss in eine Fluidkommunikation zu setzen.

6. Kartusche nach Anspruch 1, **dadurch gekennzeichnet, dass** der Deckelbereich dünne Rippen aufweist, die direkt an dessen Innenseite ausgebildet sind und zu dem inneren Volumen der Kartusche hervorstehen, um einen schmalen Spalt zwischen dem Deckelbereich und den Filtereinrichtungen zu erzeugen.

7. Kartusche nach einem der vorstehenden Ansprüche, **dadurch gekennzeichnet, dass** der Becheranschluss und der Deckelanschluss Ventileinrichtungen (126) aufweisen, die von unter Druck stehenden und durchsickernden fluiden Substanzen elastisch öffenbar sind, um einen Durchfluss der durchsickernden fluiden Substanzen zu ermöglichen.

8. Kartusche nach Anspruch 7, **dadurch gekennzeichnet, dass** die Ventileinrichtungen (126) eine Unterlage oder eine Scheibe aus einem elastischen Material aufweisen, das aus der Gummi, Elastomere oder flexible Kunststoffe aufweisenden Gruppe ausgewählt ist, wobei die Unterlage oder Scheibe einen Durchgangsschlitz (128) aufweist, der zum Isolieren des inneren Volumens der Kartusche von der äußeren Umgebung und zum Zurückhalten von Fluidrückständen innerhalb des inneren Volumens normalerweise geschlossen ist, wenn die Getränkeextraktion beendet ist.

9. Kartusche nach Anspruch 7, **dadurch gekennzeichnet, dass** die Ventileinrichtungen (126) im geöffneten Zustand den Durchfluss von den durchsickernden fluiden Substanzen durch zumindest eine enge Öffnung zur Steigerung der Bildung und Stabilität einer Crema in dem Getränke ermöglichen, dass aus der Kartusche extrahiert wird, wenn die Pulversubstanz Kaffeemehl aufweist.

10. Kartusche nach einem der vorstehenden Ansprüche, **dadurch gekennzeichnet, dass** die Haupthülle eine im Wesentlichen zylindrische Form aufweist.

11. Kartusche nach einem der vorstehenden Ansprüche, **dadurch gekennzeichnet, dass** sie aus einem der folgenden Materialien hergestellt ist: thermoplastische Kunststoffe, Aluminium, Gummi, Polylaminat-Kunststoffe, wärmegehärtete Zusammensetzungen oder jegliche Kombination davon.

12. Kartusche nach einem der vorstehenden Ansprüche, **dadurch gekennzeichnet, dass** die Pulversubstanz (4) ausgewählt ist aus der Gruppe: gemahlener Kaffee, gerösteter gemahlener Kaffee, löslicher Kaffee, Tee, Schokoladenpulver, Milchpulver, lösliche Gebräue oder Suppen.

13. Kartusche nach einem der vorstehenden Ansprüche, **dadurch gekennzeichnet, dass** der Deckelanschluss (6b) oder der Becheranschluss (6a) derart dimensioniert sind, um weiter als eine Wassereinspritzdüse einer Getränkeextraktionsmaschine zu sein, so dass der Deckelanschluss oder der Becheranschluss eine derartige Düse während einer Getränkeextraktionsphase darin aufnehmen können.

14. Extraktionsanordnung (60), die an Getränkeextraktionsmaschinen zu befestigen ist, **gekennzeichnet durch** einen Träger, der mit einem Wasserauslass einer Getränkeextraktionsmaschine verbindbar ist, und einen Kartuschenhalter (63), der an dem Träger gesichert werden kann und eine Kartusche nach Anspruch 1 hält.

## Revendications

1. Cartouche (1) pour extraire une boisson d'une substance particulaire (4), qui y est contenue, au moyen d'eau sous pression, la cartouche comprenant :
un corps principal comprenant une partie de tasse (2) et une partie de couvercle (3), la partie de tasse comprenant une base (7), une paroi latérale (8) et un rebord (9a) opposé à ladite base, la partie de couvercle (3) étant fixée audit rebord (9a) de la partie de tasse de manière à définir un volume interne de ladite cartouche,
le volume interne de ladite cartouche contenant la substance particulaire (4) comprise à l'intérieur de moyens filtrants (5a, 5b) pour retenir ladite substance particulaire et y faire la percolation de substances fluides;
ladite partie de couvercle (3) comprenant un orifice de couvercle (6b) définissant un premier passage pour des substances fluides de percolation, la base (7) de ladite partie de tasse comprenant un orifice de tasse (6a) définissant un second passage pour des substances fluides de percolation,
l'orifice de couvercle (6b) et l'orifice de tasse (6a) étant sensiblement alignés sur un axe d'injection d'eau,
**caractérisée en ce que** ledit corps principal est configuré pour être sensiblement symétrique au plan perpendiculaire audit axe d'injection d'eau, de sorte que la cartouche (1) est utilisable quel que soit l'orifice qui fonctionne comme orifice d'entrée pour recevoir l'eau et quel que soit l'orifice qui sert d'orifice de sortie pour éjecter la boisson extraite.

2. Cartouche selon la revendication 1, **caractérisée en ce que** ladite base (7) comprend une pluralité de nervures (101a) qui y sont directement formées et font saillie vers le volume interne de la cartouche, de manière à supporter lesdits moyens filtrants (5a, 5b) et ladite substance particulaire (4) et à former une fine canalisation pour mettre en communication de fluide lesdits moyens filtrants et ladite substance particulaire avec ledit orifice de tasse (6a).

3. Cartouche selon l'une quelconque des revendications précédentes, **caractérisée en ce que** ledit orifice de tasse (6a) et ledit orifice de couvercle (6b) font saillie, respectivement, de ladite partie de tasse (2) et de ladite partie de couvercle (3) vers l'extérieur par rapport audit volume interne.

4. Cartouche selon l'une quelconque des revendications précédentes, **caractérisée en ce que** ledit orifice de tasse et ledit orifice de couvercle comprennent des barrières à l'écoulement de fluide (107a, 107b) formées sur leur surface interne ou montées à l'intérieur de celle-ci, pour rompre l'écoulement de fluide direct passant à travers ledit orifice de tasse et ledit orifice de couvercle, respectivement.

5. Cartouche selon l'une quelconque des revendications précédentes, **caractérisée en ce que** ladite partie de couvercle (3) comprend une pluralité de nervures (101b) formées directement sur sa face interne et faisant saillie vers le volume interne de la cartouche, de manière à supporter lesdits moyens filtrants (5a, 5b) et ladite substance particulaire (4) et à former une fine canalisation pour mettre en communication de fluide lesdits moyens filtrants et ladite substance particulaire avec ledit orifice de couvercle.

6. Cartouche selon la revendication 1, **caractérisée en ce que** ladite partie de couvercle comprend des nervures éparses formées directement sur sa face interne et faisant saillie vers le volume interne de la cartouche de manière à créer un petit intervalle entre ladite parte de couvercle et lesdits moyens filtrants.

7. Cartouche selon l'une quelconque des revendications précédentes, **caractérisée en ce que** ledit orifice de tasse et ledit orifice de couvercle comprennent des moyens à soupape (126) qui peuvent s'ouvrir par effet élastique sous la pression desdites substances fluides de percolation de manière à permettre le passage desdites substances fluides de percolation.

8. Cartouche selon la revendication 7, **caractérisée en ce que** lesdits moyens à soupape (126) comprennent un bloc ou un disque d'un matériau élastique choisi dans le groupe constitué des caoutchoucs, des élastomères et des matériaux synthétiques souples, ledit bloc ou ledit disque comprenant une fente traversante (128) qui est normalement fermée, pour isoler le volume interne de ladite cartouche de l'environnement externe et pour retenir les résidus de fluides à l'intérieur dudit volume interne lorsque ladite extraction de boisson est terminée.

9. Cartouche selon la revendication 7, **caractérisée en ce que** lesdits moyens à soupape (126), dans leur état ouvert, laissent passer lesdites substances fluides de percolation à travers au moins un orifice étroit, pour augmenter la formation et la stabilité de la crème dans la boisson extraite de ladite cartouche lorsque ladite substance particulaire comprend du café.

10. Cartouche selon l'une quelconque des revendications précédentes, **caractérisée en ce que** ledit corps principal a une forme sensiblement cylindrique.

11. Cartouche selon l'une quelconque des revendications précédentes, **caractérisée en ce qu'**elle est fabriquée dans n'importe quel matériau choisi parmi les matériaux thermoplastiques, l'aluminium, le caoutchouc, les matériaux synthétiques polystratifiés, les compositions thermodurcissables et des combinaisons quelconques de ceux-ci.

12. Cartouche selon l'une quelconque des revendications précédentes, **caractérisée en ce que** ladite substance particulaire (4) est choisie dans le groupe comprenant le café moulu, le café moulu torréfié, le café instantané, le thé, le chocolat en poudre, le lait en poudre, les infusions de type instantané et les soupes.

13. Cartouche selon l'une quelconque des revendications précédentes, **caractérisé en ce que** l'orifice de couvercle (6b) ou l'orifice de tasse (6a) est dimensionné de manière à être plus large qu'une buse d'injection d'eau d'une machine d'extraction de boisson, de sorte que ledit orifice de couvercle ou ledit orifice de tasse puisse y recevoir cette buse durant une phase d'extraction de boisson.

14. Assemblage d'extraction (60) à monter sur des machines d'extraction de boisson, **caractérisé en ce qu'**il comprend un support qui peut être raccordé à une sortie d'eau d'une machine d'extraction de boisson et un support de cartouche (63) qui peut être fixé sur ledit support et supporter une cartouche selon la revendication 1.
